# EUROPÄISCHE PATENTANMELDUNG

(11) **EP 4 607 727 A1**
(43) Veröffentlichungstag der Anmeldung: **27.08.2025**
(21) Anmeldenummer: 25158324.1
(22) Anmeldetag: 17.02.2025
(51) Int. Cl.: H02G 3/22

(54) **LEITUNGSDURCHFÜHRUNG**

(30) Priorität: 21.02.2024 DE 102024104914
(71) Anmelder: Kaiser GmbH & Co. KG, 58579 Schalksmühle (DE)
(72) Erfinder: Mohr, Sarah, 58579 Schalksmühle (DE); Molodynski, Damian, 58313 Herdecke (DE); Langenohl, Benedikt, 58579 Schalksmühle (DE); Kassühlke, Rüdiger, 57482 Wenden (DE)
(74) Vertreter: Rentsch Partner AG

(57) **Zusammenfassung**

Die vorliegende Erfindung bezieht sich auf eine Leitungsdurchführung (1) zum Durchführen einer oder mehrerer Leitungen, die Leitungsdurchführung umfassend einen Wandungsabschnitt (2) mit einem sich in den Wandungsabschnitt hinein erstreckenden Schlitz (4), wobei der Schlitz (4) einen Hauptzweig (5) und mehrere von dem Hauptzweig (5) abgehende Nebenzweige (6) aufweist. Hierbei ist eine Leitung seitlich in den Schlitz (4) einführbar und entlang eines Einführpfades (8) über den Hauptzweig (5) zu einer Durchführposition (9) in einem der Nebenzweige (6) verschiebbar. Die Erfindung bezieht sich ebenfalls auf ein Verfahren zum Einführen mindestens einer Leitung durch einen derartigen Wandungsabschnitt (2).

## Beschreibung

Die vorliegende Erfindung bezieht sich auf eine Leitungsdurchführung zum Durchführen einer oder mehrerer Leitungen sowie ein Verfahren zum Einführen mindestens einer Leitung in eine derartige Leitungsdurchführung.

Aus dem Stand der Technik sind Leitungsdurchführungen in Wandungsabschnitten bekannt, welche eine Einführung über einen Schlitz von einer Kante des Wandungsabschnitts ermöglichen. Werden mehrere Leitungen eingeführt, werden diese in der Regel in der vordefinierten Reihenfolge hintereinander in den Schlitz eingebracht und aufeinander gestapelt. Wenn eine Leitung, insbesondere mit einem daran angebrachten Stecker, nachträglich ausgebaut werden muss bedingt dies, dass die darauf geschichteten Kabel ebenfalls ausgebaut werden müssen. Dies resultiert häufig in einer unüberschaubaren Einführung mehrerer Leitungen und einem einhergehenden erhöhten Montageaufwand.

Eine Aufgabe der Erfindung besteht darin eine verbesserte Leitungsdurchführung zum Durchführen einer oder mehrerer Leitungen bereitzustellen. Eine weitere Aufgabe der Erfindung besteht darin eine Leitungsdurchführung und/oder ein Verfahren zum Einführen mindestens einer Leitung in eine Leitungsdurchführung für eine einfachere Montage bereitzustellen.

Eine Leitungsdurchführung gemäss der Erfindung zum Durchführen einer oder mehrerer Leitungen umfasst einen Wandungsabschnitt mit einem sich, insbesondere von einem Rand des Wandungsabschnitts, in den Wandungsabschnitt hinein erstreckenden Schlitz. Ein durch den Schlitz gebildeter Aufnahmeraum für eine oder mehrere Leitungen kann also über eine an einem Rand des Wandungsabschnittes positionierte und nach aussen offene Einführöffnung zugänglich sein. Dadurch kann eine Leitung von aussen seitlich durch die Einführöffnung in den Schlitz, insbesondere in den Aufnahmeraum des Schlitzes, eingeführt werden. Unter einer seitlichen Einführung der Leitung wird hierbei verstanden, dass eine Einführrichtung senkrecht auf einer Erstreckungsrichtung der Leitung steht.

Erfindungsgemäss weist der Schlitz hierbei einen Hauptzweig und mehrere von dem Hauptzweig abgehende Nebenzweige auf. Ein Nebenzweig zweigt hierbei an einer Verzweigungsposition von dem Hauptzweig ab. Der Hauptzweig kann also entlang des Hauptzweigs mehrere Verzweigungspositionen aufweisen. An einer Verzweigungsposition können ein oder mehrere Nebenzweige von dem Hauptzweig abgehen. Beispielsweise können an einer Verzweigungsposition zwei im Bezug zum Hauptzweig sich gegenüberliegende Nebenzweige abgehen. Alternativ oder ergänzend können mehrere Nebenzweige entlang des Hauptzweigs auf gegenüberliegenden Seiten abwechselnd abgehen. Je nach Anwendung kann der Hauptzweig zumindest abschnittsweise gerade und/oder wellenförmig ausgebildet sein. Bei einer wellenförmigen Ausgestaltung bietet es sich an, wenn die Verzweigungspositionen je an den Wellentälern und/oder den Wellenbergen liegen.

Je nach Anwendung kann die Leitungsdurchführung in mehreren Nebenzweigen eine oder mehrere Durchführposition(en) aufweisen. Mit Vorteil ist pro Nebenzweig jedoch nur eine Durchführposition vorgesehen. Die Durchführposition ist insbesondere am jeweiligen Ende eines Nebenzweiges günstig positioniert. Die Leitung ist hierbei seitlich in den Schlitz einführbar und entlang eines Einführpfades über den Hauptzweig zu einer Durchführposition in einem der Nebenzweige verschiebbar. Wenn die Leitung an der Durchführposition positioniert ist, steht die Erstreckungsrichtung der Leitung also im Wesentlichen senkrecht auf dem Wandabschnitt und die Leitung erstreckt sich durch den Wandabschnitt. Die Leitungsdurchführung kann also mehrere Einführpfade, nämlich pro Durchführposition einen Einführpfad umfassen. Die mehreren Einführfade stimmen also zumindest abschnittsweise, insbesondere im Bereich des Hauptzweiges, überein.

Mit Vorteil ist der Schlitz initial zumindest bereichsweise von einer Membran verschlossen. Dies schützt z.B. einen Gehäuseinnenraum, an welchem die Leitungsdurchführung angebracht ist, vor Verschmutzung. Die Membran kann hierbei dünnwandig sein. Mit Vorteil umfasst die Membran weiter ein weichelastisches Material. Mit Vorteil ist die Membran integral mit dem Wandungsabschnitt verbunden. Beispielsweise kann die Membran und der Wandungsabschnitt gemeinsam in einem 2-Komponenten Spritzgussverfahren hergestellt werden. D.h. sowohl die Membran als auch der Wandungsabschnitt können aus Spritzgussmaterialien bestehen.

Für ein einfaches Einführen der Leitung kann die Membran entlang mindestens eines der Einführpfade eine Materialschwächung aufweisen. Die Materialschwächung kann eine Perforierung oder eine oder mehrere längliche Dünnstelle sein. Die Materialschwächung ist dazu ausgelegt bei Verschieben der Leitung entlang des Einführpfades einzureissen. Für ein einfaches Verschieben kann die Membran zusätzlich an den Verzeigungsstellen und/oder an den Durchführpositionen Öffnungen aufweisen. Die Öffnung erleichtern z.B. das Umleiten der Leitung von dem Hauptzweig in einen Nebenzweig an einer Verzweigungsposition und verringern das Risiko, dass ein unbenutzter Nebenzweig und/oder unbenutzter Teil des Hauptzweiges versehentlich miteinreisst. Alternativ kann die Membran entlang mindestens einer der Einführpfade einen Einschnitt aufweisen. Somit kann die Membran in zwei sich in Bezug zum Einschnitt gegenüberliegende Membranabschnitte unterteilt werden. Mit Vorzug liegen die beiden Membranabschnitte in einem initialen Zustand an dem Einschnitt aneinander an und/oder überlappen sich. Auf diese Weise wird eine Gehäuseinnenraum vor Staub und Schmutz geschützt. Die Membranabschnitte können hierbei derart ausgelegt sein, dass diese um eine eingeschobene Leitung herum deformierbar sind, jedoch ohne lokal eingeschobene Leitung wieder in den undeformierten, initialen Zustand zurückkehren, bei der die beiden Membranabschnitte aneinander anliegen.

Je nach Anwendung kann die Membran dreidimensional geformt sein. Hierunter wird verstanden, dass eine Oberfläche der dünnwandigen Membran sich in alle drei Raumrichtungen erstreckt. Beispielsweise kann für eine bessere Haltung und/oder Abdichtung einer Leitung die Membran entlang der Erstreckungsrichtung des Schlitzes und in eine Durchführrichtung der Leitungsdurchführung trichterförmig zulaufen. Die Durchführrichtung der Leitungsdurchführung entspricht hierbei definitionsgemäss der Erstreckungsrichtung der eingeführten Leitung. Die trichterförmige Membran kann also von der Rückseite der Leitungsdurchführung weg zulaufen. Somit kann die Membran zwei sich gegenüberliegende (schräg zulaufende) Seitenwände und optional einen zwischen den Seitenwänden angeordneten Boden umfassen. Die jeweiligen Einführpfade verlaufen in diesem Fall zwischen den Seitenwänden, bzw. wenn vorhanden auf dem Boden der Membran. Wenn kein Boden vorhanden ist, können die Seitenwände in einem initialen Zustand, d.h. vor dem Einführen und/oder nach dem Einführen der Leitung aneinander anliegen. Die trichterförmige Membran hat den Vorteil, dass die Leitung beim Einführen knicksicherer geführt wird. Weiterhin wird insbesondere im durchgeführten Zustand eine bessere Abdichtung der Leitung erzielt. Ebenfalls stellt die trichterförmige Membran eine Zugentlastung auf die Leitung bereit. Im Bereich der Durchführpositionen bietet es sich an, wenn die Membran die Durchführposition mindestens über 50% eines Umfangs der Durchführposition trichterförmig umgibt.

Für die einfache Ausführung einer Leitung mit einem an einem Leitungsende montierten Stecker o.ä. kann der Schlitz zudem eine lokale Erweiterung aufweisen. Die lokale Erweiterung ist derart ausgestaltet, dass ein Stecker aus dieser ausführbar ist. Die lokale Erweiterung umgibt eine Ausführposition zum Ausführen eines an einem Leitungsende angebrachten Steckers. Die lokale Erweiterung des Schlitzes ist mit Vorteil auf dem Hauptzweig angeordnet. Weiterhin bietet es sich an, wenn die lokale Erweiterung zwischen der Einführöffnung und einer in Erstreckungsrichtung des Hauptzweiges von der Einführöffnung aus ersten Verzweigungsposition angeordnet ist. Wenn eine Membran vorhanden ist, kann diese im Bereich der lokalen Erweiterung eine Ausführposition aufweisen. Diese weist mit Vorteil eine Materialschwächung auf. Beispielsweise können mehrere sich an einer Ausführposition kreuzende und/oder auf die Ausführposition zulaufende Dünnstellen vorhanden sein.

Für eine gute Halterung der Leitung an der jeweiligen Durchführposition kann die Leitungsdurchführung weiter mindestens ein Fixierungselement zum Fixieren der Leitung an der Durchführposition aufweisen. Das mindestens eine Fixierungselement kann hierbei an der Membran und/oder dem Wandungsabschnitt angeformt sein. Vorteilhafterweise ist das mindestens eine Fixierungselement eine angeformte Materialverdickung der Membran. Das Fixierungselement ist vorzugsweise derart ausgelegt, dass dieses eine Widerstandskraft auf die eingeschobene Leitung ausübt, wenn diese an dem Fixierungselement vorbei geschoben wird. Mit Vorteil muss die Widerstandskraft in beide Richtungen (Einschieben der der Leitung oder Ausschieben der Leitung) überwunden werden. Hierbei kann die Widerstandskraft jedoch beim Einschieben der der Leitung geringer sein als die Widerstandskraft beim Ausschieben der Leitung.

Ein Fixierungselement kann z.B. ein an die Membran angeformter Steg oder ein flächig ausgestaltetes Element sein. Ein oder mehrere flächig ausgestaltete Elemente können z.B. die Durchführposition zumindest bereichsweise klammerartig umgeben. Alternativ oder ergänzend können sich z.B. zwei je im Bezug zum Einführpfad gegenüberliegende Stege von einem Rand des Schlitzes, respektive des Nebenzweigs, in Richtung des Einführpfades zu einem distalen Ende des Steges erstrecken. Der Abstand von den beiden zum Einführpfad hingewandten distalen Enden ist hierbei mit Vorteil geringer als ein Durchmesser einer eingeführten Leitung. Beim Einführen oder Ausführen der Leitung entlang des Einführpfades und an dem Fixierungselement vorbei müssen also die Stege deformiert werden um die Leitung an diesen vorbei zu verschieben. Die für die Deformation aufgewendete Kraft entspricht hierbei der oben beschriebenen Widerstandskraft.

Alternativ oder in Ergänzung kann die Leitungsdurchführung ein Fixierungselement ausgebildet als separates Element umfassen, dass mit dem Wandungsabschnitt wirkverbunden ist. Das separate Fixierungselement kann hierbei mehrere Leitungen an den jeweiligen Durchführpositionen fixieren. Ebenfalls kann das separate Fixierungselement pro Durchführposition eine Zugentlastungslasche für die jeweilige Leitung bereitstellen.

Je nach Anwendung ist es ebenfalls denkbar, dass die Nebenzweige sich weiter in Unterzweige aufteilen. In diesem Fall entsteht also eine verzweigte Baumstruktur des Schlitzes. In diesem Fall ist es vorteilhaft, wenn die jeweiligen Durchführpositionen in den Unterzweigen, insbesondere an den Enden der jeweiligen Unterzweige angeordnet sind.

Für eine Verstärkung der Leitungsdurchführung kann entlang des Schlitzes an einer oder beiden Seiten eine Verstärkungsrippe angeordnet sein, welche sich in die Durchführrichtung erstreckt. Mir Vorteil geht die eine oder gehen die beiden sich gegenüberliegenden Verstärkungsrippen von einer Rückseite des Wandungsabschnitts ab. Die Verstärkungsrippe(n) sind mit Vorteil an den Wandungsabschnitt angeformt. Wenn der Schlitz wellenförmig ist, können die Verstärkungsrippe(n) ebenfalls wellenförmig ausgestaltet sein.

Der zuvor beschriebene Wandungsabschnitt kann in einem Wandelement eines Gehäuses angeordnet sein. Für eine modulare Verwendung des Wandelementes bietet es sich weiter an, wenn das Wandelement eine im wesentlichen rechteckige Form aufweist. Der Rand des Wandungsabschnitts kann in diesem Fall um das Wandelement umlaufend ausgestaltet sein. Der Rand des Wandungsabschnitts und/oder des Wandelementes kann zumindest bereichsweise eine Führungsschiene aufweisen. Die Führungsschiene kann zur Montage des Wandungsabschnitts, respektive des Wandelements dienen. Je nach Anwendung kann der Rand über eine Rückseite des Wandungsabschnitts hinausragen. In diesem Fall kann die Membran im Bereich des Randes einen (zusätzlichen) Membranabschnitt aufweisen. Der Membranschnitt angeordnet im Rand kann winkelig, insbesondere im Wesentlichen rechtwinkelig auf einer Vorder- oder Rückseite des Wandungsabschnitts stehen.

Je nach Anwendung kann das Wandelement in einem Gehäuse angeordnet sein. Das Gehäuse kann hierbei eine Seitenwand umfassen, welche eine Installationsöffnung umgibt. Gegenüberliegend der Installationsöffnung kann sich ein Boden befinden. Die Seitenwand kann eine röhrenartige oder mehrere winkelig aufeinander stehende Wandelemente, wie oben beschrieben umfassen. Mit Vorteil ist die Einführöffnung der Leitungsdurchführung an einem von Boden weggewandten Bereich des Wandelementes angeordnet. Die Installationsöffnung und somit auch die Einführöffnung der Leitungsdurchführung kann von einem Gehäuserahmen oder Deckel des Gehäuses verschlossen werden. Im montierten Zustand des Gehäuserahmens, bzw. Deckels kann eine Leitung mit einem Stecker durch die lokale Erweiterung der Leitungsdurchführung dennoch ausgebaut werden.

Die vorliegende Erfindung bezieht sich ebenfalls auf ein Verfahren zum Einführen mindestens einer Leitung in einen Wandungsabschnitt, bzw. in eine Leitungsdurchführung. Das Verfahren umfassend hierbei die folgenden (nicht abschliessende) Verfahrensabschnitte:
Bereitstellen eines Wandungsabschnitts mit einem sich (insbesondere von einem Rand des Wandungsabschnitts) in den Wandungsabschnitt hinein erstreckenden Schlitz, wobei der Schlitz einen Hauptzweig und mehrere von dem Hauptzweig abgehende Nebenzweige aufweist. Bereitstellen einer (ersten) Leitung, welche sich in eine Erstreckungsrichtung der ersten Leitung erstreckt. Einführen der (ersten) Leitung in den Hauptzweig des Schlitzes in eine Einführrichtung senkrecht zur Erstreckungsrichtung der (ersten) Leitung. Verschieben der (ersten) Leitung entlang eines (ersten) Einführpfades von dem Hauptzweig über eine erste Verzweigungsposition in einen (ersten) Nebenzweig bis zu einer (ersten) Durchführposition.

Weiter kann das Verfahren ebenfalls die folgenden Verfahrensschritte umfassen: Bereitstellen einer weiteren (zweiten) Leitung, welche sich in eine Erstreckungsrichtung der zweiten Leitung erstreckt. Einführen der zweiten Leitung in den Hauptzweig des Schlitzes in eine Einführrichtung senkrecht zur Erstreckungsrichtung der zweiten Leitung. Verschieben der zweiten Leitung entlang eines (zweiten) Einführpfades bis zur ersten Verzeigungsposition und anschliessend in einen zweiten Nebenzweig. Der zweite Nebenzweig kann hierbei an der ersten Verzeigungsposition vom Hauptzweig abgehen oder an einer zweiten Verzeigungsposition abgehen, wobei die zweite Verzeigungsposition in Bezug zur Erstreckungsrichtung des Hauptzweiges von der Einführöffnung aus hinter der ersten Verzeigungsposition angeordnet ist.

Weiterhin kann das Verfahren den Verfahrensschritt umfassen, des Herausschiebens der ersten Leitung (entlang des ersten Einführpfades), während die zweite Leitung in der Leitungsdurchführung, respektive an der zweiten Durchführposition verweilt. Die erste Leitung kann hierbei über eine Einführöffnung des Schlitzes herausgeschoben werden. Alternativ kann die erste Leitung ebenfalls nur bis zu einer lokalen Erweiterung geschoben werden und dann in Erstreckungsrichtung der Leitung herausgezogen werden (inklusive einem an einem Leitungsende montierten Stecker). Letzteres ist insbesondere dann von Vorteil, wenn die Einführöffnung des Schlitzes zwischenzeitlich (z.B. von einem Gehäuserahmen) verdeckt wurde.

Beim Einschieben der ersten und/oder zweiten Leitung kann eine den Schlitz initial verschiessende Membran entlang des Einführpfades aufreissen.

Beim Einschieben in die jeweilige Durchführposition und/oder Ausschieben aus der jeweilige Durchführposition der ersten und/oder zweiten Leitung kann hierbei eine Widerstandkraft hervorgerufen von mindestens einem Fixierungselement überwunden werden.

Die beschriebenen Ausführungsformen der Leitungsdurchführung können zur Ausführung des erfindungsgemässen Verfahrens dienen. Die zuvor beschriebenen Ausführungsformen des Verfahrens offenbaren zugleich entsprechend ausgestaltete Ausführungen der Leitungsdurchführung.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Ausführungsform einer Leitungsdurchführung in einem Wandungsabschnitt in einer Frontansicht;
- Fig. 2: Die Leitungsdurchführung gemäss Figur 1 in einer perspektivischen Ansicht auf die Frontseite;
- Fig. 3: Die Leitungsdurchführung gemäss Figur 1 in einer perspektivischen Ansicht auf die Rückseite;
- Fig. 4: Ein Wandelement mit mehreren Beispielen erfindungsgemässer Leitungsdurchführungen in einer perspektivischen Ansicht auf die Frontseite;
- Fig. 5: Das Wandelement gemäss Figur 4 in einer Ansicht auf die Frontseite.

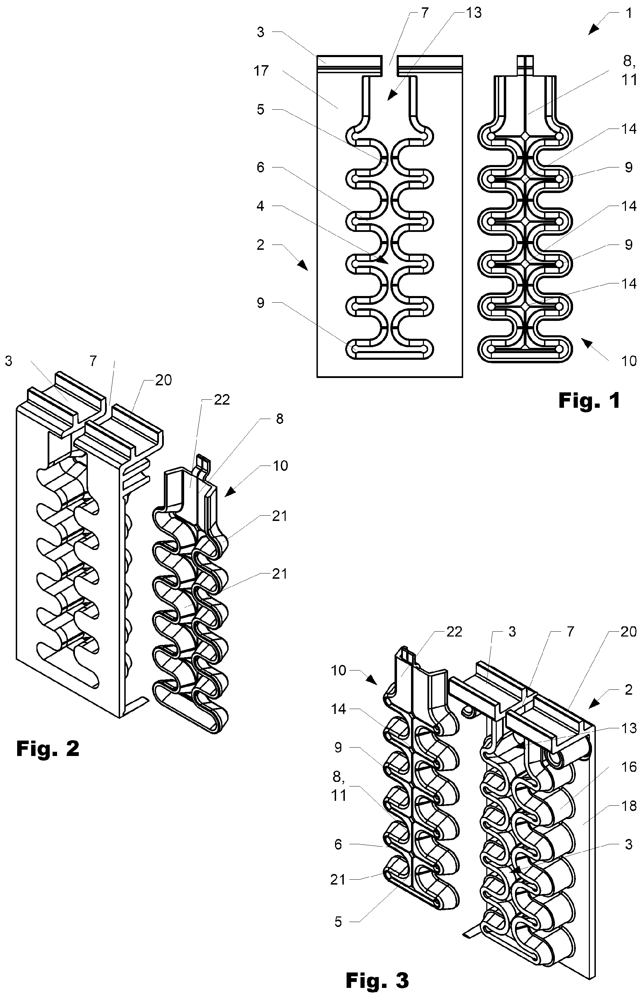

**Figuren 1 - 3** zeigen eine erste Ausführungsform einer Leitungsdurchführung 1 für ein oder mehrere Leitungen mit einem Wandungsabschnitt 2 und einer von dem Wandungsabschnitt 2 zur Darstellungszwecken losgelösten Membran 10. Während **Figur 1** eine Frontansicht des Wandungsabschnitts 2 und der Membran 10 zeigt, stellt **Figur 2** eine perspektivische Ansicht auf die Frontseite 17 und **Figur 3** eine perspektivische Ansicht auf die Rückseite 18 dar.

Wie besonders gut in **Figur 1** erkennbar, weist der Wandungsabschnitt 2 einen Schlitz 4 auf, in welchem die Membran 10 im Normalzustand angeformt ist. Der Schlitz 4 im Wandungsabschnitt 2 weist einen Hauptzweig 5 auf, welcher sich von einem Rand 3 des Wandungsabschnitts 2 in den Wandungsabschnitt 2 hinein erstreckt. Im vorliegenden Fall erstreckt sich der Hauptzweigt 5 in die vertikale Richtung. Mehrere Nebenzweige 6 gehen paarweise von dem Hauptzweig 4 an einer jeweiligen Verzeigungspositionen 14 ab. Das jeweilige Paar von Nebenzweigen 6 liegen sich im Bezug zum Hauptzweig 5 erkennbar gegenüber. Eine Leitung (nicht dargestellt) ist dabei seitlich über eine Einführöffnung 7 in den Schlitz 4 einführbar und vor dort entlang eines Einführpfades 8 über den Hauptzweig 5 zu einer Durchführposition 9 in einem der Nebenzweige 6 verschiebbar. Die Membran 10 weist entlang des Einführpfades 8 eine entsprechende Materialschwächung 11 in Form einer Dünnstelle auf. Weiterhin sind an den jeweiligen Durchführpositionen 9 Öffnungen zum einfacheren Durchführen der Leitung(en) vorgesehen. Ebenfalls können an den Verzweigungspositionen 14, wo ein Nebenzweig 6 von einem Hauptzweig 5 abgeht, eine Öffnung vorgesehen sein um den Einführvorgang, bzw. das Umleiten einer Leitung beim Einführen zu erleichtern und/oder ein unnötiges Einreissen von unbenutzten Nebenzweigen 6 zu vermeiden.

Ebenfalls gut in **Figur 1** erkennbar ist, dass im Bereich des Hauptzweiges 5, zwischen dem Rand 3 des Wandungsabschnitts 2 und der ersten Verzweigungsposition 14 eine lokale Erweiterung 13 des Hauptzweiges 5 vorhanden ist. Diese Erweiterung 13 dient zur einfachen Ausführung einer Leitung mit einem Stecker an einer Ausführposition 15 in der Membran 10.

Wie gut in **Figur 2** und **Figur 3** ersichtlich weist die Membran 10 eine dreidimensionale Gestalt auf. Die Membran 10 läuft in diesem Fall entlang des Einführpfades 8 trichterförmig zu und weist eine trichterförmige Seitenwand 21 und einen Membranboden 22 auf. Der Einführpfad 8 ist hierbei im Membranboden 22 angeordnet. Rückseitig entlang des Schlitzes 4 weist der Wandungsabschnitt 2 eine Versteifungsrippe 16 auf, welche sich entlang des Schlitzes 4 in eine Durchführrichtung der Leitungsdurchführung 1 erstreckt. Die Versteifungsrippe 16 umläuft im vorliegenden Fall den Schlitz 4 gänzlich. An den jeweiligen Enden der Versteifungsrippe 16 kann diese an dem Rand 3 des Wandungsabschnitts 2 angeformt sein, wie in **Figur 3** dargestellt.

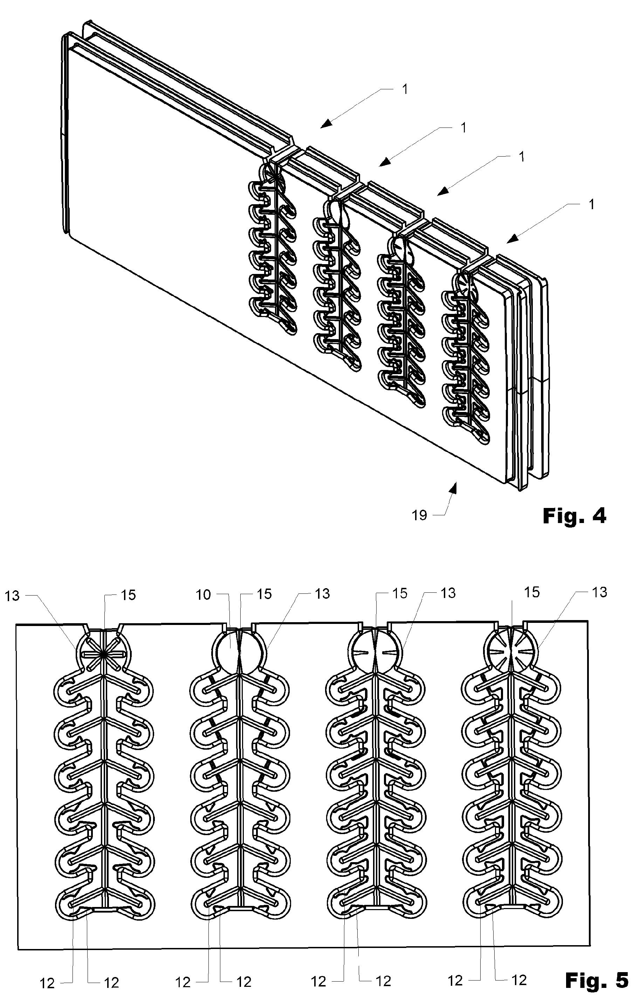

**Figur 4** und **Figur 5** zeigen ein Wandelement 19 mit mehreren Beispielen einer Leitungsdurchführung 1, wie zuvor beschrieben. Das Wandelement 19 weist hier einen umlaufenden Rand 3 mit einer Führungsschiene 20 auf. Die vier gezeigten Beispiele von erfindungsgemässen Leitungsdurchführungen 1 unterscheiden sich dabei einerseits in der Ausgestaltung der Membran 10 im Bereich der Erweiterung 13 sowie in den jeweiligen Durchführpositionen 9. Im Bereich der Erweiterung 13 zum Ausführen eines Steckers, insbesondere im eingebauten Zustand des Wandelementes 19 in einem Gehäuse, weist die Membran 10 je eine Materialschwächung 11 auf, welche sich in der Ausgestaltung leicht voneinander unterscheiden. Bei allen Beispielen sind jedoch mehrere sich an einer Ausführposition kreuzende und/oder auf die Ausführposition zulaufende Dünnstellen vorhanden, welche das Durchbrechen der Membran 10 und Ausführen eines grösseren Steckers o.ä. erleichtern. An den Durchführpositionen 9 sind je zwei Fixierungselemente 12 zum Fixieren der Leitung an der Durchführposition 9 angeordnet. Diese sind bei den vorliegenden Beispielen an die Membran 10 angeformt. Die Fixierungselemente 12 sind dazu ausgelegt eine Leitung an der Durchführposition 9 zu fixieren und ein Herausrutschen der Leitung (entlang des Einführpfades 8) zu vermeiden. Die Fixierungselemente 12 können hierbei Stege oder flächige angeformte Elemente sein. Die angeformten Elemente können zum Beispiel kammerförmig die Leitung umgeben. Die Stege können sich von einem seitlichen Rand des Schlitzes 4, respektive des Nebenzweigs 6, in Richtung des Einführpfades 8, respektive der dort angeordneten Materialschwächung 11 erstrecken. Beim Einführen oder Ausführen der Leitung entlang des Einführpfades 8 und an dem Fixierungselement 12 vorbei muss also eine lokale Widerstandskraft überwunden werden.

**LISTE DER BEZUGSZEICHEN**

| | | | |
|---|---|---|---|
| 1 | Leitungsdurchführung | 12 | Fixierungselement |
| 2 | Wandungsabschnitt | 13 | Erweiterung |
| 3 | Rand | 14 | Verzweigungsposition |
| 4 | Schlitz | 15 | Ausführposition |
| 5 | Hauptzweig | 16 | Versteifungsrippe |
| 6 | Nebenzweig | 17 | Frontseite |
| 7 | Einführöffnung | 18 | Rückseite |
| 8 | Einführpfad | 19 | Wandelement |
| 9 | Durchführposition | 20 | Führungsschiene |
| 10 | Membran | 21 | Mem branseitenwand |
| 11 | Materialschwächung | 22 | Membranboden |

## Patentansprüche

1. Leitungsdurchführung (1) zum Durchführen einer oder mehrerer Leitungen, die Leitungsdurchführung umfassend
a. einen Wandungsabschnitt (2) mit einem sich in den Wandungsabschnitt hinein erstreckenden Schlitz (4), wobei
b. der Schlitz einen Hauptzweig (5) und mehrere von dem Hauptzweig (5) abgehende Nebenzweige (6) aufweist, sodass
c. eine Leitung seitlich in den Schlitz (4) einführbar und entlang eines Einführpfades (8) über den Hauptzweig (5) zu einer Durchführposition (9) in einem der Nebenzweige (6) verschiebbar ist.

2. Leitungsdurchführung (1) gemäss einem der vorangehenden Patentansprüche, **dadurch gekennzeichnet, dass** der Schlitz (4) initial zumindest bereichsweise von einer Membran (10) verschlossen ist.

3. Leitungsdurchführung (1) gemäss Patentanspruch 2, **dadurch gekennzeichnet, dass** die Membran (10) entlang des Einführpfades (8) mindestens eine Materialschwächung (11) aufweist.

4. Leitungsdurchführung (1) gemäss Patentanspruch 2 oder 3, **dadurch gekennzeichnet, dass** die Membran (10) entlang des Einführpfades (8) und in Durchführrichtung der Leitungsdurchführung (1) trichterförmig zuläuft.

5. Leitungsdurchführung (1) gemäss einem der vorangehenden Patentansprüche, **dadurch gekennzeichnet, dass** die Leitungsdurchführung (1) in mehreren Nebenzweigen (6) je eine Durchführposition (9) aufweist.

6. Leitungsdurchführung (1) gemäss Patentanspruch 5, **dadurch gekennzeichnet, dass** die Leitungsdurchführung (1) an den jeweiligen Durchführpositionen (9) ein Fixierungselement (12) zum Fixieren der Leitung an der Durchführposition (9) aufweist.

7. Leitungsdurchführung (1) gemäss Patentanspruch 6, **dadurch gekennzeichnet, dass** das Fixierungselement (12) derart ausgelegt ist, dass dieses eine Widerstandskraft auf die eingeschobene Leitung ausübt, wenn diese an dem Fixierungselement (12) vorbei geschoben wird.

8. Leitungsdurchführung (1) gemäss Patentanspruch 6 oder 7, **dadurch gekennzeichnet, dass** das Fixierungselement (12) an der Membran (10) angeformt ist.

9. Leitungsdurchführung (1) gemäss einem der vorangehenden Patentansprüche, **dadurch gekennzeichnet, dass** der Hauptzweig (5) wellenförmig ist.

10. Leitungsdurchführung (1) gemäss einem der vorangehenden Patentansprüche, **dadurch gekennzeichnet, dass** mehrere Nebenzweige (6)
a. sich im Bezug zum Hauptzweig (5) paarweise gegenüberliegen und/oder
b. entlang des Hauptzweigs (5) auf gegenüberliegenden Seiten abwechselnd abgehen.

11. Leitungsdurchführung (1) gemäss einem der vorangehenden Patentansprüche, **dadurch gekennzeichnet, dass** der Schlitz (4), insbesondere auf dem Hauptzweig (5), eine lokale Erweiterung (13) zum Durchführen von an den Leitungen angebrachten Steckern aufweist.

12. Leitungsdurchführung (1) gemäss Patentanspruch 11, **dadurch gekennzeichnet, dass** die lokale Erweiterung (13) zwischen einer Einführöffnung (7) des Schlitzes (4) und einer in Bezug zur Erstreckungsrichtung des Hauptzweiges (5) aus ersten Verzweigungsposition (14) angeordnet ist, an welcher ein erster Nebenzweig (6) von dem Hauptzweig (5) abgeht.

13. Leitungsdurchführung (1) gemäss einem der vorangehenden Patentansprüche, **dadurch gekennzeichnet, dass** der Wandungsabschnitt (2) entlang des Schlitzes (4) mindestens eine Versteifungsrippe (16) aufweist, welche sich in eine Durchführrichtung der Leitungsdurchführung (1) erstreckt.

14. Wandelement (19) für ein Gehäuse mit einer Leitungsdurchführung (1) gemäss einem der vorangehenden Patentansprüche.

15. Gehäuse mit einem Wandelement (19) gemäss Patentanspruch 14.

16. Verfahren zum Einführen mindestens einer Leitung in einen Wandungsabschnitt (2), das Verfahren umfassend die folgenden Verfahrensabschnitte
a. Bereitstellen eines Wandungsabschnitts (2) mit einem sich in den Wandungsabschnitt (2) hinein erstreckenden Schlitz (4), wobei der Schlitz einen Hauptzweig (5) und mehrere von dem Hauptzweig (5) abgehende Nebenzweige (6) aufweist;
b. Bereitstellen einer ersten Leitung, welche sich in einer Erstreckungsrichtung der Leitung erstreckt;
c. Einführen der ersten Leitung in den Hauptzweig (5) des Schlitzes (4) in eine Einführrichtung senkrecht zur Erstreckungsrichtung der ersten Leitung;
d. Verschieben der ersten Leitung entlang eines Einführpfades (8) von dem Hauptzweig (5) in einen Nebenzweig (6) bis zu einer Durchführposition (9).
